# EUROPEAN PATENT SPECIFICATION

(11) **EP 1 534 466 B1**
(45) Date of publication and mention of the grant of the patent: **18.04.2007**
(21) Application number: 03763886.3
(22) Date of filing: 17.07.2003
(51) Int. Cl.: B23K 33/00, B23K 20/02, B23K 20/14

(54) **FORGE WELDING METHOD**
SCHMIEDESCHWEISSVERFAHREN
PROCEDE DE SOUDAGE PAR FORGEAGE

(30) Priority: 17.07.2002 EP 02077911; 17.07.2002 EP 02077912
(43) Date of publication of application: 01.06.2005
(73) Proprietor: SHELL INTERNATIONALE RESEARCH MAATSCHAPPIJ B.V., 2596 HR Den Haag (NL)
(72) Inventor: DEN BOER, Johannis, Josephus, NL-2288 GD Rijswijk (NL); COLE, Anthony, Thomas, NL-2288 GD Rijswijk (NL); DIMITRIADIS, Klisthenis Brunei Shell, Jalan Utara Panaga KB3534 Seria (BN); HALMRAST, Björn, N-8255 Rökland (NO); MOE, Per, Harald, deceaced (NO); RABBEN, Kjell, Magne, N-4327 Sandnes (NO); ZIJSLING, Djurre, Hans, NL-2288 GD Rijswijk (NL)
(86) International application number: PCT/EP2003/007787
(87) International publication number: WO 2004/007139

(56) References cited:
- GB-A- 793 402
- US-A- 4 669 650
- US-A- 4 728 760
- US-A- 4 736 084
- PATENT ABSTRACTS OF JAPAN vol. 016, no. 034 (M-1204), 28 January 1992 (1992-01-28) -& JP 03 243286 A (CHIYODA CORP), 30 October 1991 (1991-10-30)
- PATENT ABSTRACTS OF JAPAN vol. 1995, no. 04, 31 May 1995 (1995-05-31) -& JP 07 024577 A (KUBOTA CORP), 27 January 1995 (1995-01-27)
- PATENT ABSTRACTS OF JAPAN vol. 010, no. 207 (M-500), 19 July 1986 (1986-07-19) -& JP 61 049789 A (NIPPON KOKAN KK), 11 March 1986 (1986-03-11)

## Description

### Background of the invention

The invention relates to a method for joining pipe ends by forge welding.

Forge welding involves circumferential heating of the pipe ends that are to be joined and subsequently pressing the pipe ends together to form a metallurgical bond.

A large variety of heating technologies may be used to make the pipe ends hot enough such that the metallurgical bond can be made. The heating techniques may involve electric, electromagnetic, induction, infrared, sparking and/or friction heating or combinations of these and other heating methods.

It is known from US patents 4,566,625; 4,736,084; 4,669,650 and 5,721,413 issued to Per H. Moe that it may be beneficial to flush the pipe ends just before and during the forge welding operation with a reducing flushing gas, such as hydrogen or carbon monoxide, such that any oxygen skin is removed from the heated pipe ends and a metallurgical bond with a minimal amount of irregularities is obtained. It is also known from US patents Nos. 2,719,207 and 4,728,760 to use non explosive mixtures comprising about 95% by volume of a substantially insert gas, such as argon, nitrogen and/or helium, and about 5% by volume of a reducing gas, such as hydrogen and/or carbon monoxide for flash welding and induction butt welding.

Experiments have shown that forge welding techniques are capable to generate high quality metallurgical bonds between tubular ends, in particular if the pipe ends are flushed with a reducing flush gas mixture during the heating and/or welding operation, but that the red-hot pipe ends are generally deformed such that upsets are formed in the region of the welding zone.

For many applications it is required to remove upsets after the welding operation, which then involves a grinding or machining operation which is difficult and expensive to accomplish at many sites where pipe ends are welded together, such as on oil rigs, pipe-laying barges and many offshore and onshore sites where underground or above ground pipelines are to be installed.

The method according to the preamble of claim 1 is known from US patent 4,669,650. In the known method the tubular ends are shaped in an inwardly sloping configuration. Japanese patent JP 03-243286 also discloses a forge welding method wherein the tubular ends have an inwardly sloping configuration. UK patent GB 793402 discloses a forge welding method wherein the welded pipe ends have complementary concave and convex shapes.

It is an object of the present invention to provide a method for forge welding of tubulars wherein the generation of upsets in the welding zone is minimized.

### Summary of the Invention

The method according to the invention comprises the features of claim 1.

In addition the portion of each pipe that is to be forged may be reduced in cross section such that deformation during forging returns it to a dimension substantially the same as its original thickness.

The precise angles and dimensions of the end preparation depend on the material being joined and its coefficient(s) of expansion, wall thickness, pipe diameter, degree of heat required for welding, the width of the heated zone and the desired forge length. Typical values are provided in Table 1 below for carbon steel tubes approximately 4 mm wall thickness and 70 mm diameter.

The sloping angle of the inner and/or outer walls of the tubular ends may be selected such that the ratio between the average diameter D(t) of the tip of the tubular end and the average diameter D(b) of the base of the tubular end is related to an estimated temperature difference between said tip and base of the tubular end during the forge welding process and a thermal expansion co-efficient of the steel grade(s) of the tubular end.

For many forge welding operations said ratio D(t)/D(b) may be selected between 0.8 and 0.99.

To increase the surface of the forge welded pipe ends and to simultaneously assist alignment of the pipe ends the end face of one of the tubular ends that are to be welded together may a substantially convex shape and the end face of the other tubular end may have a substantially concave shape.

The forge welded tubulars may comprise a low grade steel base pipe and a higher grade steel cladding on the inner and/or outer surface of the base pipe. In such case it is preferred that the end faces are shaped such that when the tubular ends are pressed together the end faces of the cladding(s) touch each other first the end faces of the base pipe ends subsequently touch each other. It is also preferred that any non-oxidising or reducing flush gas is introduced from the opposite side of the pipe wall to the clad layer.

It will be understood that the inwardly tapered tubular end may have a large variety of shapes, and that the inward deflection may be determined by iterative calculation and/or experiments in order to asses that the amount of upset of the forge welded tubulars is reduced to a minimum.

In use the amount of material at the pipe ends deformed by forging is closely controlled to further minimise upset.

It is observed that US patent No. 4.669.650 discloses a forge welding process wherein the outer walls of the tubular ends are machined away to a greater depth that the inner walls of the tubular ends. The known configuration is, however, not configured such that the heated tubular ends are substantially cylindrical during the forge welding operation.

### Description of preferred embodiments

Preferred embodiments of the method according to the present invention will be described with reference to the accompanying drawings, in which:
Fig. 1 shows a pair of concave and convex pipe ends that have been interconnected by the forge welding method according to the invention;
Fig. 2 shows how the concave and convex pipe ends are inwardly oriented at an inward sloping angle X which is selected such that the heated concave and convex pipe ends have a substantially longitudinal orientation;
Fig. 3 is a longitudinal sectional view of a pair of cladded tubular ends just before they are joined by the forge welding method according to the invention;
Fig. 4a is a longitudinal sectional view of a pair of internally cladded tubular ends wherein one tubular end is concave and the other tubular end is convex;
Fig. 4b is a longitudinal sectional view of a pair of externally cladded tubular ends wherein one end is convex and the other end is concave; and
Fig. 5 is a longitudinal sectional view of an end of a cladded tubular wherein the thickness of the clad layer is increased at the end of the tubular.

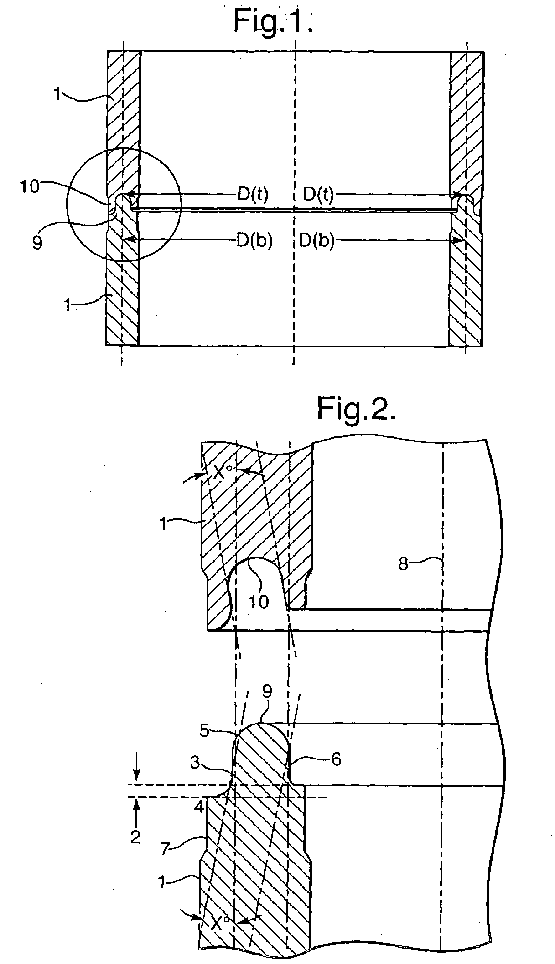

In Fig. 1,a pair of heated axially aligned pipe ends is shown and in Fig. 2 the unheated ends are shown, wherein X is the inward sloping angle, 1 = pipe having original wall thickness, 2 = minimum forge length required to complete the weld, 3,5,6 = typical radii of convex pipe end 9, 4 = first contact shoulder, 7 = pipe end having reduced wall thickness, 8 = pipe center line and 10 = concave pipe end. The sloping angles x of the unheated convex and concave pipe ends 9,10 illustrated in Fig. 1 are selected such that the heated pipe ends accurately intermesh and are accurately axially aligned as illustrated such that a seamless forge weld is created when the pipe ends 9 and 10 are pressed together and only minimal upsets are formed at the inner and outer surfaces of the pipes 1 in the region of the forge welded joint.

An outline of the dimensions of the pipe connection shown in Fig. 1 and 2 is described in Table 1:

**Table 1: Typical values for forge welding weld preparation - 4mm WT, 70 mm OD pipe**

| Identifier (see Figure 1) | Description | Typical Value |
|---|---|---|
| X | Inward sloping angle | 1 to 5°. |
| 1 | Original wall thickness | 4 mm |
| 3, 5, 6 | Preparation radii | 0.6 mm |
| 2 | Minimum forge length | 0.05 mm |
| 7 | Reduced wall thickness | 3 mm |
| 8 | Pipe centre line | |
| 4 | First contact shoulder | |

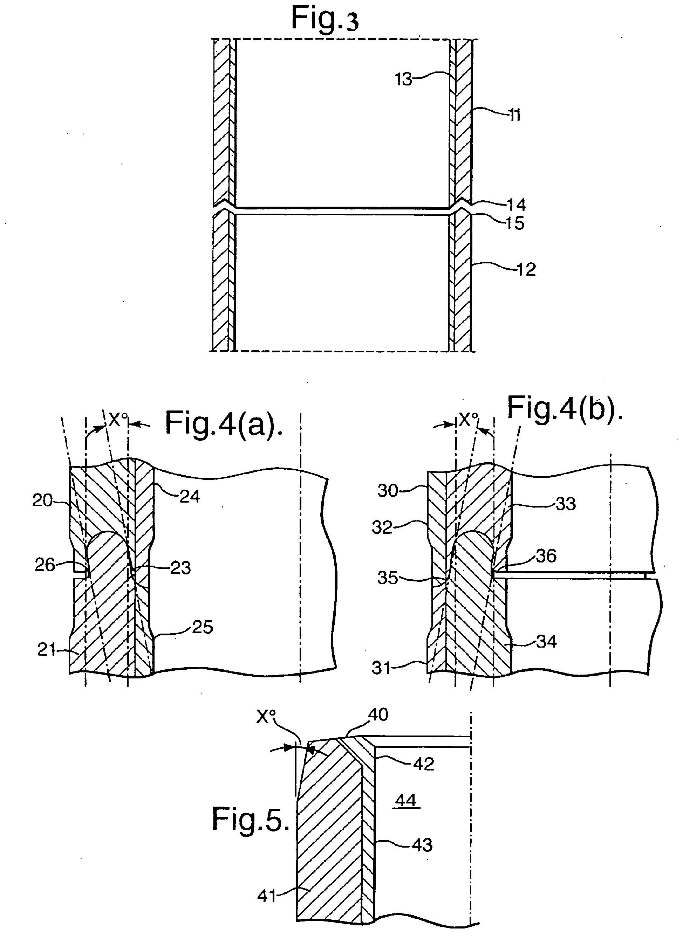

Referring now to Figure 3 there is shown an upper tubular 11 and a lower tubular 12 which each comprise a low grade steel base pipe have an inner cladding of high chromium steel 13.

The tubular ends 14 and 15 are wedge shaped such that the tips of the wedge shaped ends are formed by the claddings 13. This ensures that when the tubular ends are pressed against each other the claddings 13 touch each other before the ends of the base pipes touch each other. Throughout the forge welding operation a flushing gas is flushed around the tubular ends 14 and 15 and to ensure continuation of the flushing between the tubular ends 14 and 15 after the claddings 13 touch each other, flushing gas is injected onto the uncladded outer surfaces of the tubulars 11 and 12.

Figure 4a depicts an embodiment where the lower end surface 26 of the upper tubular 20 has a generally concave shape and the upper end surface 23 of the lower tubular 21 has a generally convex shape.

The inner surface of the tubulars 20 and 21 is cladded with a stainless steel lining 24 and 25 and the concave and convex end surfaces 23, 26 are shaped such that the linings 24 and 25 touch each other first and that the base pipes 20, 21 touch each other thereafter and that the unheated end surfaces 23, 26 are inwardly oriented at a sloping angle X. In this case a reducing non-explosive flushing gas is injected from the exterior of the tubulars and the tubular ends still form a wedge such that the touching zone gradually increases from the outer surface towards the inner surface of the forge welded tubulars. In this way a good bond between the linings 24,25 is ensured and inclusion of oxides between the forge welded tubulars 20 and 21 is minimized.

Fig. 4b illustrates a forge welded joint of a pair of low grade steel base pipes 33, 34 of which the outer surface is cladded with a stainless steel lining 30, 31 and of which the end surfaces 35, 36 have an intermeshing convex and concave shape such that the unheated end surfaces 35, 36 are inwardly oriented at a sloping angle X and that the stainless steel linings 30, 31 touch each other before the base pipes 33, 34 touch each other when the end surfaces'35, 36 are heated and pressed together during the forge welding operation. In this case a reducing gas is injected from the interior side 44 of the tubulars during the forge welding operation.

Figure 5 depicts a tapered wedge shaped end 40 of a pipe 41 which has been clad with a clad layer 43 and where further material 42 compatible with the clad layer 43 has been deposited around the end of the pipe 2 to allow further machining without exposing the base pipe 41. The inward sloping angle X of the tapered end 40 is selected such that the heated pipe ends are substantially axially aligned and the taper angle is selected such that the clad layers 43 of adjacent pipe ends touch each other first before the base pipes touch each other during a forge welding operation.

## Claims

1. A method for interconnecting tubulars by forge welding, the method comprising shaping the tubular ends that are to be welded together into an inwardly sloping configuration, wherein the sloping configuration is such that when the tubular ends are heated during the forge welding process the heated tubular ends deform as a result of thermal expansion into a substantially longitudinally oriented cylindrical shape, **characterized in that** the end face of one of the tubular ends has a convex shape and the end face of the other tubular end has a concave shape.

2. The method of claim 1, wherein the sloping angle of the inner and outer walls of the tubular ends is selected such that the ratio between the average diameter D(t) of the tip of the tubular end and the average diameter D(b) of the base of the tubular end is related to an estimated temperature difference between said tip and base of the tubular end during the forge welding process and a thermal expansion co-efficient of the steel grade or grades of the tubular end.

3. The method of claim 2, wherein said ratio D(t)/D(b) is between 0.8 and 0.99.

4. The method of any preceding claim, wherein the tubular ends are machined to a reduced wall thickness in the welding zone.

5. The method of claim 1, wherein tubulars comprise a low grade steel base pipe and a higher grade steel cladding on the inner and/or outer surface of the base pipe and the end faces are shaped such that when the tubular ends are pressed together the end faces of the cladding(s) touch each other before the end faces of the base pipe ends touch each other.

6. The method of claim 5, wherein the tubular ends are wedge shaped and the tips of the wedges are formed by the claddings.

7. The method of any one of claims 1-4, wherein only the adjacent end portions of adjacent low grade steel base pipes are covered with clad metal to allow further machining of said end portions without exposing the base pipes.

8. The method of claim 5, wherein during at least part of the forge welding operation a flushing gas is flushed around the welding zone and at least part of the flushing gas is injected into the welding zone from the uncladded side of the tubular, such that the injected flushing gas can continue to reach the ends of the still spaced base pipes after the claddings have touched each other.

9. The method of claim 8, wherein the flushing gas is a reducing flushing gas.

10. The method of claim 9, wherein the flushing gas is a non-explosive mixture of a substantially inert gas and a reducing gas.

11. The method of claim 10, wherein the substantially inert gas comprises helium, argon, nitrogen, and/or carbon dioxide and the reducing gas comprises hydrogen and/or carbon monoxide.

12. The method of claim 11, wherein the non-explosive flushing gas mixture comprises more than 90% by volume of a substantially inert gas and at least 2% by volume of hydrogen.

13. The method of any preceding claim, wherein the tubulars are oilfield and/or well tubulars.

## Patentansprüche

1. Verfahren zum Verbinden von Rohren durch Schmiedeschweißen, wobei das Verfahren die Formung der miteinander zu verschweißenden Rohrenden zu einer einwärts geneigten Konfiguration umfaßt, wobei die geneigte Konfiguration derart ist, daß beim Erhitzen der Rohrenden während des Schmiedeschweißvorganges sich die erhitzten Rohrenden infolge der Wärmedehnung zu einer im wesentlichen langgestreckt orientierten zylindrischen Gestalt verformen, **dadurch gekennzeichnet, daß** die Endfläche eines der Rohrenden eine konvexe Gestalt und die Endfläche des anderen Rohrendes eine konkave Gestalt hat.

2. Verfahren nach Anspruch 1, bei welchem der Neigungswinkel der inneren und äußeren Wände der rohrförmigen Enden derart gewählt wird, daß das Verhältnis zwischen dem Durchschnittsdurchmesser D(t) der Spitze des Rohrendes und dem Durchschnittsdurchmesser D(b) der Basis des Rohrendes auf eine angenommene Temperaturdifferenz zwischen Spitze und Basis des Rohrendes während des Schmiedeschweißverfahrens und einen Wärmedehnungskoeffizienten von Stahlqualität oder Qualität des rohrförmigen Endes bezogen wird.

3. Verfahren nach Anspruch 2, bei welchem das Verhältnis D(t) zu D(b) zwischen 0,8 und 0,99 gewählt wird.

4. Verfahren nach einem der vorhergehenden Ansprüche, bei welchem die Rohrenden bearbeitet werden, um eine reduzierte Wanddicke in der Schweißzone zu erzeugen.

5. Verfahren nach Anspruch 1, bei welchem die Rohre ein Basisrohr von niedriger Stahlqualität und eine Auskleidung an der Innen- und/oder Außenfläche des Basisrohres von einer höheren Stahlqualität aufweisen, und die Endflächen derart geformt werden, daß beim Zusammenpressen der rohrförmigen Enden die Endflächen der Auskleidungen einander berühren, bevor die Endflächen der Basisrohrenden einander berühren.

6. Verfahren nach Anspruch 5, bei welchem die Rohrenden keilförmig und die Spitzen der Keile durch die Auskleidungen ausgebildet werden.

7. Verfahren nach einem der Ansprüche 1-4, bei welchem nur die benachbarten Endteile von benachbarten Basisrohren einer niedrigeren Stahlqualität mit dem Auskleidungsmetall bedeckt werden, um eine weitere Bearbeitung der Endteile ohne Exponierung der Basisrohre zu ermöglichen.

8. Verfahren nach Anspruch 5, bei welchem während des letzten Teiles des Schmiedeschweißvorganges ein Spülgas um die Schweißzone gespült wird und zumindest ein Teil des Spülgases in die Schweißzone von der nicht ausgekleideten Seite des Rohres eingebracht wird, derart, daß das eingebrachte Spülgas die Enden der noch immer beabstandeten Basisrohre erreichen kann, nachdem die Auskleidungen einander berührt haben.

9. Verfahren nach Anspruch 8, bei welchem das Spülgas ein reduzierendes Spülgas ist.

10. Verfahren nach Anspruch 9, bei welchem das Spülgas ein nicht explosives Gemisch eines im wesentlichen inerten Gases und eines reduzierenden Gases ist.

11. Verfahren nach Anspruch 10, bei welchem das im wesentlichen inerte Gas Helium, Argon, Stickstoff und/oder Kohlendioxid umfaßt, und das reduzierende Gas Wasserstoff und/oder Kohlenmonoxid aufweist.

12. Verfahren nach Anspruch 11, bei welchem das nicht explosive Spülgasgemisch mehr als 90 Vol.-% eines im wesentlichen inerten Gases und zumindest 2 Vol.-% Wasserstoff aufweist.

13. Verfahren nach einem der vorhergehenden Ansprüche, bei welchem die Rohre Ölfeld- und/oder Schachtrohre sind.

## Revendications

1. Procédé pour relier entre eux des éléments tubulaires par soudage par forgeage, le procédé comprenant le formage des extrémités d'élément tubulaire qui sont à souder ensemble en une configuration inclinée vers l'intérieur, dans lequel la configuration inclinée est telle que, quand les extrémités d'élément tubulaire sont chauffées pendant le processus de soudage par forgeage, les extrémités d'élément tubulaire chauffées se déforment en raison de la dilatation thermique en une forme cylindrique orientée de manière sensiblement longitudinale, **caractérisé en ce que** la face terminale d'une des extrémités d'élément tubulaire a une forme concave.

2. Procédé selon la revendication 1, dans lequel l'angle d'inclinaison des parois intérieures et extérieures des extrémités d'élément tubulaire est choisi de telle manière que l'angle entre le diamètre moyen D(t) de la pointe de l'extrémité d'élément tubulaire et le diamètre moyen D(b) de la base de l'extrémité d'élément tubulaire soit lié à une différence de température estimée entre lesdites pointe et base de l'extrémité d'élément tubulaire pendant le processus de soudage par forgeage et un coefficient de dilatation thermique de la qualité ou des qualités d'acier de l'extrémité d'élément tubulaire.

3. Procédé selon la revendication 2, dans lequel ledit rapport D(t) / D(b) est compris entre 0,8 et 0,99.

4. Procédé selon une quelconque revendication précédente, dans lequel les extrémités d'élément tubulaire sont usinées pour arriver à une épaisseur de paroi réduite dans la zone de soudage.

5. Procédé selon la revendication 1, dans lequel les éléments tubulaires comprennent un tuyau de base en acier de qualité inférieure et un placage en acier de qualité supérieure sur la surface intérieure et / ou extérieure du tuyau de base et les faces terminales sont formées de telle manière que, quand les extrémités d'élément tubulaire sont pressées ensemble, les faces terminales du (des) placage(s) se touchent avant que les faces terminales des extrémités du tuyau de base se touchent.

6. Procédé selon la revendication 5, dans lequel les extrémités d'élément tubulaire sont en forme de coin et les pointes des coins sont formées par les placages.

7. Procédé selon une quelconque des revendications 1-4, dans lequel seules les parties terminales adjacentes de tuyaux de base adjacents en acier de qualité inférieure sont couvertes de métal plaqué pour permettre un usinage ultérieur desdites parties terminales sans exposer les tuyaux de base.

8. Procédé selon la revendication 5, dans lequel pendant au moins une partie de l'opération de soudage par forgeage, un gaz de rinçage est envoyé autour de la zone de soudage et au moins une partie du gaz de rinçage est injecté dans la zone de soudage depuis le côté non plaqué de l'élément tubulaire, de sorte que le gaz de rinçage injecté peut continuer à atteindre les extrémités des tuyaux de base encore espacés après que les placages se sont touchés.

9. Procédé selon la revendication 8, dans lequel le gaz de rinçage est un gaz de rinçage réducteur.

10. Procédé selon la revendication 9, dans lequel le gaz de rinçage est un mélange non explosif d'un gaz sensiblement inerte et d'un gaz réducteur.

11. Procédé selon la revendication 10, dans lequel le gaz sensiblement inerte comprend l'hélium, l'argon, l'azote et / ou le dioxyde de carbone et le gaz réducteur comprend l'hydrogène et / ou le monoxyde de carbone.

12. Procédé selon la revendication 11, dans lequel le mélange de gaz de rinçage non explosif comprend plus de 90 % en volume d'un gaz sensiblement inerte et au moins 2 % en volume d'hydrogène.

13. Procédé selon une quelconque revendication précédente, dans lequel les éléments tubulaires sont des éléments tubulaires de champ pétrolifère et / ou de puits.
